(19) **Europäisches Patentamt**

**European Patent Office**

**Office européen des brevets**

(11) **EP 0 816 885 B1**

(12) **EUROPÄISCHE PATENTSCHRIFT**

(45) Veröffentlichungstag und Bekanntmachung des Hinweises auf die Patenterteilung:
**31.10.2001 Patentblatt 2001/44**

(51) Int Cl.⁷: **G02B 6/44**

(21) Anmeldenummer: **97109340.6**

(22) Anmeldetag: **10.06.1997**

(54) **Optisches Kabel mit Armierungsmitteln und Verwendung desselben**

Optical cable with armouring and use of the same

Câble optique avec armature et son utilisation

(84) Benannte Vertragsstaaten:
**AT BE DE DK FR GB IT LU NL SE**

(30) Priorität: **18.06.1996 CH 151996**

(43) Veröffentlichungstag der Anmeldung:
**07.01.1998 Patentblatt 1998/02**

(73) Patentinhaber: **Brugg Telecom AG**
**CH-5200 Brugg (CH)**

(72) Erfinder: **Etter, Hanspeter**
**4571 Ichertswil (CH)**

(74) Vertreter: **Steudtner, Werner, Dipl.-Ing.**
**Lindenhof 5**
**8604 Hegnau bei Zürich (CH)**

(56) Entgegenhaltungen:
| | |
|---|---|
| EP-A- 0 023 154 | EP-A- 0 405 716 |
| EP-A- 0 405 851 | EP-A- 0 541 198 |
| DE-A- 4 228 272 | DE-A- 4 337 180 |
| DE-B- 2 628 070 | FR-A- 2 559 592 |
| GB-A- 2 010 528 | GB-A- 2 105 865 |
| US-A- 4 606 604 | |

**Beschreibung**

Die Erfindung bezieht sich auf ein leicht manuell transportierbares und verlegbares, bei Verlegung auf freiem Feld bezüglich einseitiger Drucklasten hochbelastbares Feldkabel.

Optische Kabel mit mindestens einem Lichtwellenleiter, der von einer Armierungsmittel umfassenden Hülle mit mindestens zwei aus festem Material bestehenden Schichten umgeben ist, von denen die innerste Schicht von einem Lichtwellenleiter-Röhrchen gebildet ist und sich im Kern des optischen Kabels befindet , sind bekannt.

Optische Kabel dieser Art sind aus den FR 2 559 592 A, GB 2 105 865 A und EP 0 405 851 A bekannt.

Ein spezielles optisches Kabel dieser Art ist aus dem DE-GM 9217037.4 und ein ähnliches Kabel aus der DE-OS 4401079 bekannt. Bei diesen speziellen bekannten Kabeln liegen die Armierungsmittel im wesentlichen in einer dort als "Biegeebene" bezeichneten Längsschnittfläche des Kabels, in die auch die Kabelachse fällt. Wird ein solches Kabel nun so gebogen, dass der Flächenkrümmungsradius der Längsschnittfläche im Biegebereich des Kabels an allen Stellen im wesentlichen gleich gross ist, dann setzen die Armierungsmittel des Kabels der Biegung keinen nennenswerten Widerstand entgegen, so dass der Flächenkrümmungsradius an der Biegungsstelle immer kleiner wird, bis das Kabel an dieser Stelle einknickt. Bei einer Biegung des Kabels in der Weise, dass der Flächenkrümmungsradius einer zu der genannten Längsschnittfläche rechtwinklig angeordneten zweiten Längsschnittfläche im Biegebereich des Kabels an allen Stellen im wesentlichen gleich gross ist, verhindern die Armierungsmittel hingegen sowohl weitgehend eine stärkere Biegung als auch ein Einknicken des Kabels an der Biegungsstelle. Die genannten speziellen bekannten optischen Kabel der eingangs genannten Art haben also den Nachteil, dass sie bei einer Biegung über die besagte "Biegeebene" nicht knickfest sind, d.h. dass sie bei einer Biegung des Kabels über die besagte "Biegeebene" bis auf einen unter dem vorgeschriebenen minimalen Biegeradius des Kabels liegenden Krümmungsradius an der Biegestelle einknicken. Um ein solches Einknicken bei den bekannten Kabeln zu vermeiden, muss somit der vorgeschriebene minimale Biegeradius bei den bekannten Kabeln der eingangs genannten Art relativ gross sein und darf bei der Verlegung des Kabels im praktischen Betrieb desselben nicht unterschritten werden.

Für die gewöhnliche Verlegung von optischen Kabeln sind die bekannten Ausführungsformen derselben zwar durchaus geeignet und weisen für die meisten Fälle von festen und vorgeplanten Verlegungen auch einen genügend kleinen minimalen Biegeradius sowie eine genügende Knickfestigkeit auf, aber insbesondere bei provisorischen oder temporären Verlegungen, z.B. auf dem freien Feld, wo beispielsweise schwere Tiere auf das Kabel treten können, sind weder die bei den bekannten optischen Kabeln vorgeschriebenen minimalen Biegeradien, die z.B. in der Grössenordnung von 150 mm liegen können, noch die sich daraus ergebende relativ geringe Knickfestigkeit ausreichend. Knickfestigkeit muss aber gegeben sein, damit eine optimale Datenübertragung über die Lichtwellenleiter gewährleistet ist, da eingeknickte Lichtwellenleiter normalerweise keine Daten mehr übertragen können. Darüber hinaus sind die besagten vorgegebenen "Biegeebenen" der genannten speziellen bekannten optischen Kabel der eingangs genannten Art besonders bei temporärer Verlegung, insbesondere auch bei mehrmaliger temporärer Verlegung ein und desselben Kabels, oder ganz besonders auch bei Belastung von auf dem freien Feld verlegten optischen Kabeln durch schwere Tiere von besonders grossem Nachteil, weil temporäre oder provisorische Verlegungen von bekannten optischen Kabeln, z.B. für die Bild- oder Nachrichtenübertragung, wegen der notwendigen Verlegung mit relativ grossen minimalen Biegeradien und dem erforderlichen Schutz des Kabels vor Beschädigungen, z.B. durch schwere bzw. knickgefährdende Belastungen, wie sie z.B. durch Tritte von schweren Tieren auftreten und zum Knicken des Kabels führen können, mit einem relativ hohen Kosten- und Arbeitsaufwand, ähnlich wie bei fest zu verlegenden optischen Kabeln, verbunden sind.

Der Erfindung lag die Aufgabe zugrunde, ein Feldkabel zu schaffen, das über alle bei einem optischen Kabel möglichen Biegeebenen gebogen werden kann und dabei in jedem Fall ein geringer minimaler Biegeradius und eine entsprechend hohe Knickfestigkeit erreichbar ist.

Erfindungsgemäss wird das mit einem Feld kabel mit den Merkmalen des Anspruches 1 erreicht,

Hauptvorteil des vorliegenden Feldkabels ist, dass der minimale Biegeradius durch die das Lichtwellenleiter-Röhrchen umgebende Schicht aus im wesentlichen gleichgrosse Knickfestigkeit in allen Querrichtungen zur Kabelachse gewährleistenden metallischen Armierungsmitteln um ein Vielfaches kleiner sein kann als der minimale Biegeradius der bekannten optischen Kabel. Dadurch ergibt sich natürlich auch eine entsprechend wesentlich höhere Knickfestigkeit bei dem vorliegenden Feldkabel gegenüber den bekannten optischen Kabeln. Zusätzlich hat das vorliegende Kabel den Vorteil, dass es über alle für das Kabel möglichen Biegeebenen gebogen werden kann.

Bei dem vorliegenden Feldkabel ist die Knickfestigkeit des Kabels bis zur Biegbarkeitsgrenze des Kabels und im Falle, dass der Biegeradius an der Biegbarkeitsgrenze kleiner als der minimal zulässige Biegeradius ist, bis zu einem minimalen Biegeradius von 20 mm, zweckmässig von 15 mm und vorzugsweise von 10 mm, gewährleist. Dies hat den besonderen Vorteil, dass der minimale Biegeradius beim vorliegenden Kabel gegenüber den bekannten Kabeln bis zum 15-fachen kleiner sein kann und damit eine relativ hohe Knickfestigkeit erreicht werden kann. Dabei hängt der minimale Biegeradius des Feldkabels von der Schichtdicke der metallischen Armierungsmittel sowie vom Durchmesser und der Wandstärke des Lichtwellenleiter-Röhrchens ab. Diese Masse können je nach den Anforderungen, die an das Feldkabel gestellt werden, festgelegt werden.

Mit besonderem Vorteil besteht das Lichtwellenleiter-Röhrchen aus Metall, vorzugsweise aus Edelstahl. Der Vorteil dieser Ausführungsform besteht darin, dass zwei übereinanderliegende rohrförmige metallische Schichten die Knickfestigkeit der inneren rohrförmigen Schicht und damit des Lichtwellenleiter-Röhrchens wesentlichen erhöht. Bei Feldkabeln mit besonders kleinem Durchmesser kann das Lichtwellenleiter-Röhrchen vorteilhaft auch aus Kunststoff, vorzugsweise aus einem Polyamid, bestehen, so dass z.B. bei Verwendung von nur einem Licht-wellenleiter ein sehr geringer Durchmesser für das Lichtwellenleiter-Röhrchen erreicht werden kann.

Vorteilhaft können ein oder mehrere Lichtwellenleiter, z.B. bis zu 24 Lichtwellenleiter, in einem Lichtwellenleiter-Röhrchen eingebracht sein, wobei der oder die Lichtwellenleiter in bekannter Weise eine minimale Ueberlänge von z.B. mindestens 0,5 ‰, vorzugsweise über 3 ‰, aufweisen können, um nach starken Zugbelastungen weiterhin voll funktionsfähig bleiben zu können. Ausserdem können die aus Metall bzw. Edelstahl sowie auch die aus Kunststoff bestehenden Lichtwellenleiter-Röhrchen vorteilhaft in bekannter Weise mit einem Gel ausgefüllt sein.

Bei einer vorteilhaften Ausführungsform des vorliegenden Kabels umfasst die weitere Schicht aus metallischen Armierungsmitteln mindestens eine Lage aus wenigstens vier, vorzugsweise aus mehr als fünf, im wesentlichen parallel zueinander wendelförmig verlaufenden Runddrähten. Damit kann schon bei kleinen Kabeldurchmessern eine maximale Zugfestigkeit von 6000 N erreicht werden, was eine bis um das 2-fache höhere maximale Zugbelastbarkeit des vorliegenden Feldkabels im Vergleich zu den bekannten optischen Kabeln darstellt. Aehnliches gilt auch für die maximale Querbelastbarkeit. Durch den im wesentlichen parallelen wendelförmigen Verlauf der Drähte um das Licht-wellenleiter-Röhrchen entsteht eine rohrartige Schicht, die den Vorteil hat, dass sie derart flexibel ist, dass sie das Biegen des Feldkabels in genügender Weise erlaubt, aber ein zum Knicken des Kabels führendes Biegen praktisch verhindert. Allgemein ist ein wesentlicher Vorteil dieser Ausführungsform des vorliegenden Kabels, dass sie hohe Belastungsgrenzen für Zugbelastung sowie Querdruckbelastung und ausserdem Nagesicherheit, Schnitt- und Schlagfestigkeit ermöglicht. Vorteilhafterweise können dabei verschiedene Anforderungen an die maximale Zugbelastung und an den maximalen Querdruck durch eine entsprechende Wahl des Schlagwinkels der wendelförmig verlaufenden Drähte erfüllt werden, wobei der Schlagwinkel vorzugsweise im Bereich von 10° bis 30° liegt.

Bei der vorliegenden Verwendung von Runddrähten zur Armierung ist der Durchmesser der Drähte in den einzelnen Drahtlagen mindestens zu dem (1/K)-fachen des Innendurchmessers der betreffenden Drahtlage festzule-gen, wenn

$$K = (\sqrt{1+(1+tg^2\alpha)/tg^2(180°/n)}-1),$$

$\alpha$ der die Schlaglänge bestimmende Schlagwinkel der Drahtführung in der betreffenden Drahtlage relativ zur Kabelachse und n die Anzahl der Drähte in der Drahtlage ist. Der Innendurchmesser der ersten und untersten Drahtlage ist gleich dem Durchmesser des Lichtwellenleiter-Röhrchens und der Innendurchmesser einer gegebenenfalls vorhandenen zweiten Drahtlage gleich der Summe aus dem Durchmesser des Lichtwellenleiter-Röhrchens und dem Doppelten des Durchmessers der Drähte in der ersten Drahtlage. Ist der Schlagwinkel $\alpha$ = 45°, dann wird

$$K = (\sqrt{1+2/tg^2(180°/n)}-1)$$

und ist der Durchmesser der Drähte einer gegebenenfalls vorhandenen zweiten Drahtlage gleich dem Durchmesser der Drähte in der ersten Drahtlage, dann sind die Schlagwinkel $\alpha_1$ in der ersten Drahtlage und $\alpha_2$ in der zweiten Drahtlage sowie die Drahtzahl $n_1$ in der ersten Drahtlage und die Drahtzahl $n_2$ in der zweiten Drahtlage so zu wählen, dass

$$(\sqrt{1+(1+tg^2\alpha_2)/tg^2(180°/n_2)}- \sqrt{1+(1+tg^2\alpha_1)/tg^2(180°/n_1)}) = 2$$

wird. Bei einem besonders vorteilhaften Ausführungsbeispiel ist z.B. $\alpha_1$ = 45°; $\alpha_2$ = 47,28°; $n_1$ = 6 ; $n_2$ = 10 und der Drahtdurchmesser der Drähte in der ersten und zweiten Lage gleich dem 0,60765-fachen des Durchmessers des Lichtwellenleiter-Röhrchens, also im Nennwert gleich 0,6 mm, wenn das Lichtwellenleiter-Röhrchen einen Durchmesser von 1 mm hat.

Mit grossem Vorteil kann die weitere Schicht aus metallischen Armierungsmitteln mindestens zwei Lagen aus jeweils wenigstens vier, vorzugsweise aus mehr als fünf, im wesentlichen parallel zueinander wendelförmig verlaufenden Runddrähten umfassen, wobei übereinanderliegende Drahtlagen in entgegengesetzter Schlagrichtung verseilt sein. Dadurch wird nicht nur die Flexibilität des vorliegenden Kabels erhöht sondern auch die Knickfestigkeit sowie die maximale Zugfestigkeit und die maximale Querbelastbarkeit nebst verbesserter Schlagfestigkeit entsprechend zusätzlich erhöht. Damit kann eine maximale Zugfestigkeit von 9000 N erreicht werden, was eine bis um das 3-fache höhere maximale Zugbelastbarkeit von dem vorliegenden Feldkabel gegenüber den bekannten optischen Kabeln darstellt. Aehnliches gilt auch für die maximale Querbelastbarkeit.

Zur Vermeidung hoher Materialkosten und Erzielung eines insbesondere bei temporären Verlegungen wichtigen möglichst geringen Kabelgewichtes sollte die weitere Schicht aus metallischen Armierungsmitteln zweckmässig nicht mehr als drei Lagen aus verseilten Runddrähten umfassen, weil der Kabeldurchmesser sonst zu gross wird. Das gilt insbesondere deswegen, weil das vorliegende Feldkabel in jedem Fall einen relativ kleinen minimalen Biegeradius und eine entsprechend hohe Knickfestigkeit aufweisen sollte.

Je nach Anforderung an das vorliegende Kabel können die die weitere Schicht aus metallischen Armierungsmitteln bildenden Runddrähten vorteilhaft aus Stahl, Edelstahl, Federstahl, Aluminium, Aldrey oder einer entsprechenden aluminiumummantelten Drahtsorte bestehen Damit kann vorteilhaft je nach Anforderung an das vorliegende Kabel z.B. eine hohe Korrosionsfestigkeit erreicht werden, beispielsweise bei der Ausführung aus den genannten Aluminiumlegierungen, aus Aluminium oder aus Edelstahl, und/oder eine hohe elektrische Leitfähigkeit, z.B. bei der Ausführung aus den genannten Aluminiumlegierungen oder aus Aluminium, und/oder eine hohe Zugfestigkeit, z.B. bei der Ausführung aus Edelstahl, oder eine besondere Erhöhung der Knickfestigkeit, beispielsweise bei der Ausführung aus Federstahl, oder ein besonders kostengünstiger Aufbau, z.B. bei der Ausführung aus Stahl, erzielt werden. Bei der Verwendung von aluminiumummantelten Drähten lassen sich Kombinationen der genannten Vorteile, insbesondere eine Kombination von hoher Korrosionsfestigkeit, hoher elektrischer Leitfähigkeit und hoher Zugfestigkeit erzielen.

Vorteilhaft kann die weitere Schicht aus metallischen Armierungsmitteln mindestens eine Lage aus Runddraht umfassen und die Durchmesser der Runddrähte jeweils in ein und derselben Drahtlage gleich sein und zweckmässig in einem Bereich von 0,2 bis 2,5 mm, vorzugsweise 0,5 bis 1,5 mm, liegen. Dadurch ergeben sich relativ dünne Feldkabel, die für eine temporäre Verlegung von Vorteil sind, weil sie damit in grosser Länge auf Kabelrollen aufgebracht werden können und trotzdem noch leicht genug sein können, um von Hand verlegt zu werden. Da bei dem vorliegenden Kabel sehr geringe minimale Biegeradien möglich sind, kann der Kern der Kabelrolle sehr klein gehalten werden und die Kabelrolle dabei ein relativ langes Feldkabel von z.B. bis zu 1000 m Länge aufnehmen. Dabei kann ein 1000 m langes Kabel nach der vorliegenden Erfindung inklusive Kabelrolle ein Gewicht von weniger als 20 Kg aufweisen, was eine leichte manuelle Transportierbarkeit auch von längeren Feldkabeln selbst im unwegsamen Gelände ermöglicht.

Bei einer weiteren bevorzugten Ausführungsform ist die genannte, aus mindestens zwei Schichten bestehende Hülle des Lichtwellenleiters von einer Ummantelung aus Kunststoff, vorzugsweise aus Polyurethan, umschlossen. Dies hat nicht nur den Vorteil einer elektrischen Isolation des optischen Kabels sondern auch den weiteren Vorteil, dass beim Einsatz des optischen Kabels auf freiem Feld eine Verschmutzung der Aussenseite der Armierung verhindert wird. Zusätzlich bildet die Ummantelung natürlich auch einen erhöhten Korrosionsschutz und kann ausserdem bei der Verwendung eines entsprechenden Kunststoffes auch einen Säureschutz bieten. Die Ummantelung kann u.a. auch aus einem flammenwidrigen Kunststoff ausgeführt und damit bis zu einem gewissen Grad feuerfest sein, was insbesondere auch von Vorteil sein kann, wenn das Lichtwellenleiter-Röhrchen aus Kunststoff besteht.

Vorteilhaft kann die Ummantelung auf ihrer Innenseite durch mindestens einen schraubenlinienförmig verlaufenden Metalldraht, vorzugsweise einen Stahldraht oder Federstahldraht, verstärkt sein, was abermals eine zusätzliche Erhöhung der Knickfestigkeit ergibt.

Der Durchmesser des vorliegenden Kabels kann vorteilhaft im Bereich zwischen 1 bis 6 mm, vorzugsweise zwischen 1,5 bis 3 mm, liegen und damit relativ klein sein, was bei temporärer Verlegung des Kabels für dessen manuellen Transport im Hinblick auf das Kabelgewicht und die zu transportierende höchstmögliche Kabellänge von besonderem Vorteil ist. Bei einem im unteren Teil des angegebenen Durchmesserbereiches liegenden Kabeldurchmesser von z.B. 1,5 mm kann natürlich auch der minimale Biegeradius entsprechend klein und damit auch die Knickfestigkeit entsprechend gross sein und ausserdem die Kabellänge bei vorgegebenem Maximalgewicht des Kabels relativ gross sein.

Das vorliegende Feldkabel wird verwendet für Feldleitungen zur temporären Verbindung von nichtstationären zum Datenaustausch vorgesehenen Sende/Empfangs-Stationen oder Feldtelefonen. Bei dieser Verwendung kommen alle genannten Vorteile eines leichten Transportes von Hand, eines besonders kleinen minimalen Biegeradius und der entsprechend hohen Knickfestigkeit, einer hohen Belastbarkeit auf Zug und Querdruck und einer guten Schlagfestigkeit voll zur Geltung.

Anhand der nachstehenden Figuren ist die Erfindung im folgenden an einem Ausführungsbeispiel näher erläutert.

Es zeigen

Fig.1    ein Ausführungsbeispiel eines Feldkabels nach der Erfindung mit einer aus drei Schichten bestehenden, einen Lichtwellenleiter umgebenden Hülle, im Schnitt in der in Fig. 2 gezeigten Schnittebene I-I,

Fig.2    eine Seitenansicht des in Fig.1 gezeigten Kabels mit der Schnittebene I-I.

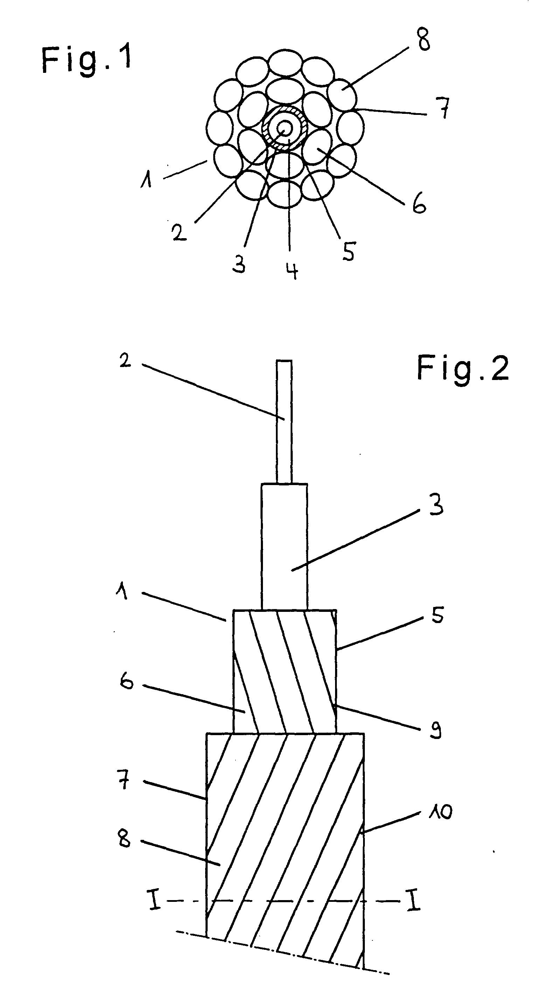

Das in Fig. 1 gezeigte Feldkabel 1 besteht aus einem Lichtwellenleiter 2, der innerhalb eines als Lichtwellenleiter-Röhrchen aus Edelstahl ausgebildeten und als Armierungsmittel dienenden ersten Schicht 3 mit einer Ueberlänge von mindestens 0,5 ‰, vorzugsweise über 3 ‰, eingebracht ist, so dass der Lichtwellenleiter 2 auch nach einer Zugbelastung oder Wärmeausdehnung des Kabels 1 weiterhin voll funktionsfähig bleibt. Der Hohlraum 4 ist zwischen dem Lichtwellenleiter 2 und dem die erste Schicht 3 bildenden Lichtwellenleiter-Röhrchen zur Verhinderung eines eventuellen Eindringens z.B. von Kondenswasser oder von Feuchtigkeit, die die Uebertragungsfähigkeit des Lichtwellenleiters 2 durch unerwünschte Spiegelungseffekte stark beeinträchtigen oder verhindern könnte, mit einem Gel gefüllt. Die Wandstärke des die erste Schicht 3 bildenden Lichtwellenleiter-Röhrchens, die bei dem vorliegenden Kabel vorzugsweise im Bereich von 0,05 bis 0,3 mm liegen kann, beträgt 0,1 mm, wobei der Durchmesser des die erste Schicht 3 bildenden Lichtwellenleiter-Röhrchens, der beim vorliegenden Kabel vorzugsweise im Bereich von 0,8 bis 3 mm liegen kann, 0,9 mm beträgt. Das Lichtwellenleiter-Röhrchen 3 zeichnet sich durch einen minimalen Biegeradius vom 15 mm aus. Zur Erreichung einer grossen Knickfestigkeit ist über der den Kern des Kabels 1 bildenden, als Lichtwellenleiter-Röhrchen ausgebildeten ersten Schicht 3 eine die erste Drahtlage bildende zweite Schicht 5 von sechs durchmessergleichen Edelstahldrähten 6 in einer ersten Schlagrichtung mit einem Schlagwinkel von 22,5° und eine die zweite Drahtlage bildende dritte Schicht 7 von zwölf durchmessergleichen Edelstahldrähten 8 in zur ersten Schlagrichtung entgegengesetzter Schlagrichtung mit einem Schlagwinkel von 21,2° aufgebracht. Die erste Lage 5 aus Edelstahldrähten 6 und die zweite Lage 7 aus Edelstahldrähten 8 haben dabei alle den gleichen Durchmesser von 0,8 mm. Der minimale Biegeradius des Kabels 1 liegt dabei bei 19 mm, so dass das Kabel 1 eine sehr hohe Knickfestigkeit hat und eine hohe Flexibilität aufweist. Die maximale Zugbelastbarkeit des Kabels 1 liegt bei 6000 N und die maximale Querbelastbarkeit bei 400'000 N/m, so dass das Kabel 1 in allen Richtungen extremen Belastungen standhalten kann. Insbesondere bei der temporären Verlegung des optischen Kabels 1 im freien Feld ist ausserdem die hohe Schlagfestigkeit von besonderem Vorteil.

In Fig. 2 sind die entgegengesetzten Schlagrichtungen 9 und 10 der als zweite und dritte Schicht 5 und 7 dienenden verseilten ersten und zweiten Drahtlage schematisch dargestellt. Durch die sich bei in entgegengesetzter Schlagrichtung 9 und 10 der verseilten Edelstahldrähte 6 und 8 ergebende hohe Flexibilität des Kabels 1 wird eine Torsion des Kabels 1 weitgehend verhindert und gleichzeitig eine leichte Biegbarkeit des Kabels 1 in jeder Querrichtung zur Kabelachse ermöglicht, wobei aber die Biegung des Kabels 1 um so schwieriger wird, je näher die Biegung an den minimalen Biegeradius herankommt, weil durch die Zugbeanspruchung der Edelstahldrähte an der Aussenseite der Biegung und die Druckbeanspruchung derselben an der Innenseite der Biegung mit steigender Zug- und Druckbeanspruchung die Flexibilität des Kabels 1 sinkt, was insbesondere für die die dritte Schicht 7 bildende zweite Drahtlage gilt. Ein Einknicken des Kabels 1 wird durch die beiden in entgegengesetzter Schlagrichtung verseilten Drahtlagen 5 und 7 praktisch vollständig verhindert. Zur Messung der Knickfestigkeit und der Definition des Begriffes "Knickfestigkeit" wird auf die DIN-Norm EN 187000 verwiesen.

Bei der Verwendung des in Fig. 1 gezeigten Feldkabels für Feldleitungen zur temporären Verbindung von nichtstationären zum Datenaustausch vorgesehenen Sende-/Empfangs-Stationen oder Feldtelefonen kann das Kabel 1 erforderlichenfalls auch unter Zugspannung z.B. über Strassen geführt werden, weil das Kabel 1 dafür eine ausreichende Zugbelastbarkeit, eine genügende Schlagfestigkeit und auch eine ausreichende Querbelastbarkeit aufweist, so dass auch schwere Fahrzeuge über das Kabel fahren können. Da Feldkabel über alle möglichen Hindernisse geführt werden müssen, z.B. über Gelände, auf dem sich schwere Tiere befinden, die natürlich jederzeit auf das Feldkabel treten können, oder z.B. um Hausecken oder Pfähle oder Stangen mit relativ geringem Krümmungsradius, ist die hohe Knickfestigkeit des Kabels 1 von ganz besonderem Vorteil. Durch die sich kumulierenden besonders guten Eigenschaften in Bezug auf Zugfestigkeit sowie Querdruckbelastbarkeit und hoher Flexibilität bei sehr hoher Knickfestigkeit des Kabels 1 ist es sogar möglich, das Feldkabel 1 über dem Boden, also in der Luft, zu spannen. Das Feldkabel 1 kann auf einfache Weise verlegt werden, da auf allfällige Beschädigungsmöglichkeiten kaum Rücksicht genommen werden braucht, womit eine sehr schnelle und kostengünstige temporäre Verlegbarkeit gewährleistet ist. Da das optische Kabel 1 einen relativ kleinen Durchmesser von 4,1 mm aufweist, kann ein relativ langes Kabel von z.B. ca. 500 m Länge von Hand, vorzugsweise auf einer kleinen Kabelrolle, leicht an den nächsten Verlegungsort transportiert bzw. getragen werden, so dass die temporäre Verlegung auch im unwegsamen Gelände ohne weiteres erfolgen kann. Durch die hohe Flexibilität des optischen Kabels 1 bietet der laufend erneute Einsatz desselben Kabels keinerlei Schwierigkeiten.

Legende zur Zeichnung

1 =      Feldkabel

2 =      Lichtwellenleiter

3 = erste Schicht bzw. Lichtwellenleiter-Röhrchen

4 = Hohlraum zwischen Lichtwellenleiter u. erster Schicht

5 = zweite weitere Schicht bzw. erste Drahtlage

6 = Edelstahldrähte der zweiten Schicht

7 = dritte weitere Schicht bzw. zweite Drahtlage

8 = Edelstahldrähte der dritten Schicht

9 = Schlagrichtung der ersten Drahtlage

10 = entgegengesetzte Schlagrichtung der zweiten Drahtlage


**Patentansprüche**

1. Leicht manuell transportierbares und verlegbares, bei der Verlegung auf freiem Feld bezüglich einseitiger Drucklasten hochbelastbares Feldkabel, in dem mindestens ein Lichtwellenleiter (2) vorgesehen ist, der von einer Armierungsmittel umfassenden Hülle mit mindestens zwei aus festem Material bestehenden Schichten (3,5,7) umgeben ist, von denen die innerste Schicht (3) von einem Lichtwellenleiter-Röhrchen gebildet ist und sich im Kern des Kabels (1) befindet, wobei mindestens eine das Lichtwellenleiter-Röhrchen (3) umgebende weitere Schicht (5; 7) aus metallischen Armierungsmitteln (5,7) gebildet ist, die derart ausgebildet sind, dass eine in allen Querrichtungen zur Kabelachse im wesentlichen gleichgrosse Knickfestigkeit erzielt wird und die Knickfestigkeit des Kabels (1) bis zu einem minimalen Biegeradius des Kabels (1) gegeben ist, wobei als metallische Armierungsmittel Runddrähte dienen und der Durchmesser der Drähte (5,7) mindestens gleich dem (l/k)-fachen des Innendurchmessers der betreffenden Drahtlage (5,7) ist, wobei

$$K = (\sqrt{1+(1+tg^2\alpha)/tg^2(180°/n}} - 1),$$

$\alpha$ der die Schlaglänge bestimmende Schlagwinkel der Drahtführung in der betreffenden Drahtlage (5,7) relativ zur Kabelachse und n die Anzahl der Drähte in der betreffenden Drahtlage (5,7) ist und der Innendurchmesser der unmittelbar über dem Lichtwellenleiter-Röhrchen (3) angeordneten Drahtlage (5) gleich dem Durchmesser des Lichtwellenleiter-Röhrchens (3) ist und wobei der Durchmesser der Runddrähte und des Lichtwellenleiter-Röhrchens (3) sowie dessen Wandstärke so ausgebildet sind, dass der minimale Biegeradius des Kabels unter 36 mm liegt.

2. Feldkabel nach Anspruch 1, **dadurch gekennzeichnet, dass** das Lichtwellenleiter-Röhrchen (3) aus Metall, vorzugsweise aus Edelstahl, oder aus Kunststoff, vorzugsweise aus einem Polyamid, besteht.

3. Feldkabel nach einem der Ansprüche 1 oder 2, **dadurch gekennzeichnet, dass** die weitere Schicht aus metallischen Armierungsmitteln (5,7) mindestens eine Lage (5) aus wenigstens vier, vorzugsweise aus mehr als fünf, im wesentlichen parallel zueinander wendelförmig verlaufenden Runddrähten (6,8) umfasst.

4. Feldkabel nach einem der Ansprüche 1 bis 3, **dadurch gekennzeichnet, dass** die weitere Schicht aus metallischen Armierungsmitteln (5,7) mindestens zwei Lagen (5,7) aus jeweils wenigstens vier, vorzugsweise aus mehr als fünf, im wesentlichen parallel zueinander wendelföraig verlaufenden Runddrähten (6,8) umfasst und dass übereinanderliegende Drahtlagen (5,7) in entgegengesetzter Schlagrichtung (9,10) verseilt sind.

5. Feldkabel nach einem der Ansprüche 1 bis 4. **dadurch gekennzeichnet, dass** die weitere Schicht aus metallischen Armierungsmitteln (5,7) maximal drei Lagen (5,7) aus verseilten Runddrähten (6,8) umfasst.

6. Feldkabel nach einem der Ansprüche 1 bis 5, **dadurch gekennzeichnet, dass** die weitere Schicht aus metallischen Armierungsmitteln(5,7) aus Runddrähten (6,8) aufgebaut ist und die Drähte aus Stahl, Edelstahl, Federstahl, Aluminium, Aldrey oder einer entsprechenden aluminiumummantelten Drahtsorte bestehen.

**7.** Feldkabel nach einem der Ansprüche 1 bis 6 **dadurch gekennzeichnet, dass** die weitere Schicht aus metallischen Armierungsmitteln (5,7) mindestens eine Lage (5) aus Runddraht umfasst und die Durchmesser der Runddrähte (6,8) jeweils in ein und derselben Drahtlage (5,7) gleich sind und zweckmässig in einem Bereich von 0,2 bis 2,5 mm, vorzugsweise 0,5 bis 1,5 mm, liegen.

**8.** Feldkabel nach einem der Ansprüche 1 bis 7, **dadurch gekennzeichnet, dass** die genannte, aus mindestens zwei Schichten (3,5,7) bestehende Hülle des Lichtwellenleiters von einer Ummantelung aus Kunsstoff, vorzugsweise aus Polyurethan, umschlossen ist.

**9.** Feldkabel nach Anspruch 8, **dadurch gekennzeichnet, dass** die Ummantelung auf ihrer Innenseits durch mindestens einen schraubenlinienförmig verlaufenden Metelldraht, vorzugsweise einen Stahldraht oder Federdraht, verstärkt ist.

**10.** Feldkabel nach einem der Ansprüche 1 bis 9, **dadurch gekennzeichnet, dass** der Durchmesser des Kabels (1) im,Bereich zwischen 1 bis 6 mm, vorzugsweise zwischen 1,5 bis 3 mm, liegt.

## Claims

**1.** A readily manually transportable and layable field cable which, when laid in an open field, has a high current-carrying capacity with respect to unidirectional loads, and in which at least one optical fibre (2) is provided, which is surrounded by a sheath which comprises armouring means and has at least two layers (3, 5, 7) which are made of a solid material and of which the innermost layer (3) is formed by an optical-fibre conduit and is located within the core of the cable (1), at least one further layer (5; 7) surrounding the optical-fibre conduit (3) being formed out of metal armouring means (5, 7), which are constructed such that a substantially uniform buckling strength is achieved in all transverse directions with respect to the cable axis, and the buckling strength of the cable (1) is maintained up to a minimum bending radius of the cable (1), round wires serving as metal armouring means and the diameter of the wires (5, 7) being at least equal to (1/K) times the internal diameter of the relevant wire layer (5, 7), where

$$K = \sqrt{1+(1 +\mathrm{tg}^2\alpha)/\mathrm{tg}^2(180°/n)} -1),$$

$\alpha$ is the angle of twist, determining the length of lay, in the path of the wires in the relevant wire layer (5, 7) in relation to the cable axis, and n is the number of wires in the relevant wire layer (5, 7), and the internal diameter of the wire layer (5) arranged immediately over the optical-fibre conduit (3) is equal to the diameter of the optical-fibre conduit (3), and where the diameter of the round wires and of the optical-fibre conduit (3), as well as the wall thickness of this latter, is constructed such that the minimum bending radius of the cable is below 36 mm.

**2.** A field cable according to Claim 1, **characterised in that** the optical-fibre conduit (3) is made of metal, preferably high-grade steel, or of plastics material, preferably a polyamide.

**3.** A field cable according to one of Claims 1 or 2, **characterised in that** the further layer of metal armouring means (5, 7) comprises at least one layer (5) of at least four, preferably more than five, substantially mutually parallel, helically extending round wires (6, 8).

**4.** A field cable according to one of Claims 1 to 3, **characterised in that** the further layer of metal armouring means (5, 7) comprises at least two layers (5, 7) of in each case at least four, preferably more than five, substantially mutually parallel, helically extending round wires (6, 8), and **in that** wire layers (5, 7) lying one on top of another are stranded in an opposing direction of lay (9, 10).

**5.** A field cable according to one of Claims 1 to 4, **characterised in that** the further layer of metal armouring means (5, 7) comprises a maximum of three layers (5, 7) of stranded round wires (6, 8).

**6.** A field cable according to one of Claims 1 to 5, **characterised in that** the further layer of metal armouring means (5, 7) is composed of round wires (6, 8), and the wires are made of steel, high-grade steel, spring steel, aluminium, Aldrey or an appropriate aluminium-coated wire type.

7. A field cable according to one of Claims 1 to 6, **characterised in that** the further layer of metal armouring means (5, 7) comprises at least one layer (5) of round wire, and the diameters of the round wires (6, 8) in each case in one and the same wire layer (5, 7) are the same and are expediently in a range between 0.2 and 2.5 mm, preferably 0.5 and 1.5 mm.

8. A field cable according to one of Claims 1 to 7, **characterised in that** the said sheath of the optical fibre, which comprises at least two layers (3, 5, 7), is surrounded by a coating of plastics material, preferably of polyurethane.

9. A field cable according to Claim 8, **characterised in that** the coating is reinforced on its inside by at least one helically extending metal wire, preferably a steel wire or spring wire.

10. A field cable according to one of Claims 1 to 9, **characterised in that** the diameter of the cable (1) is in the range between 1 and 6 mm, preferably between 1.5 and 3 mm.

**Revendications**

1. Câble de campagne facile à transporter manuellement et à poser, apte à être sollicité fortement lors de la pose en plein champ en ce qui concerne des charges de pression unilatérales, dans lequel est prévu au moins un guide d'ondes de lumière (2) entouré par une gaine comprenant un moyen de blindage avec au moins deux couches (3, 5, 7) constituées d'un matériau solide, dont la couche la plus intérieure (3) est formée par un petit tube de guide d'ondes de lumière et se trouve dans l'âme du câble (1), où au moins une couche supplémentaire (5, 7) entourant le petit tube de guide d'ondes de lumière (3) est formée par des moyens de blindage métalliques (5, 7) qui sont réalisés de façon à obtenir une résistance à la flexion sensiblement de même grandeur dans toutes les directions transversales à l'axe du câble et que la résistance à la flexion du câble (1) est fournie jusqu'à un rayon de courbure minimal du câble (1), où sont utilisés comme moyens de blindage métalliques des fils ronds et le diamètre des fils (5, 7) est au moins égal à (1/K)-fois du diamètre intérieur de la couche de fil concernée (5, 7), où

$$K=(\sqrt{1+(1+tg^2\alpha)/tg^2(180°/n)}-1) \, ,$$

$\alpha$ représente l'angle de choc déterminant la longueur de choc du guidage de fil dans la couche de fil concernée (5, 7) relativement à l'axe du câble et n le nombre des fils dans la couche de fil concernée (5, 7), et le diamètre intérieur de la couche de fil (5) disposée directement au-dessus du petit tube de guide d'ondes de lumière (3) est égal au diamètre du petit tube de guide d'ondes de lumière (3), et où le diamètre des fils ronds et du petit tube de guide d'ondes de lumière (3) ainsi que son épaisseur de paroi sont conçus de façon que le rayon de courbure minimal du câble soit inférieur à 36 mm.

2. Câble de campagne selon la revendication 1,
**caractérisé en ce que** le petit tube de guide d'ondes de lumière (3) est réalisé en métal, de préférence en acier fin ou en matière synthétique, de préférence en un polyamide.

3. Câble de campagne selon l'une des revendications 1 ou 2, **caractérisé en ce que** la couche supplémentaire en moyens de blindage métalliques (5, 7) comprend au moins une couche (5) constituée d'au moins quatre, de préférence de plus de cinq fils ronds (6, 8) sensiblement parallèles les uns aux autres, s'étendant hélicoïdalement.

4. Câble de campagne selon l'une des revendications 1 à 3, **caractérisé en ce que** la couche supplémentaire en moyens de blindage métalliques (5, 7) comprend au moins deux couches (5, 7) constituées chacune par au moins quatre, de préférence par plus que cinq fils ronds (6, 8) sensiblement parallèles les uns aux autres et s'étendant hélicoïdalement et **en ce que** des couches de fil superposées (5, 7) sont câblées dans la direction de choc opposée (9, 10).

5. Câble de campagne selon l'une des revendications 1 à 4, **caractérisé en ce que** la couche supplémentaire en moyens de blindage métalliques (5, 7) comprend au maximum trois couches (5, 7) en fils ronds câblés (6, 8).

6. Câble de campagne selon l'une des revendications 1 à 5, **caractérisé en ce que** la couche supplémentaire en moyens de blindage métalliques (5, 7) est formée par des fils ronds (6, 8) et **en ce que** les fils sont en acier, en acier fin, en acier à ressort, en aluminium, en Aldrey ou en une sorte de fil à gaine d'aluminium correspondante.

7. Câble de campagne selon l'une des revendications 1 à 6, **caractérisé en ce que** la couche supplémentaire en moyens de blindage métalliques (5, 7) comprend au moins une couche (5) en fil rond et que les diamètres des fils ronds (6, 8) dans une même couche de fil (5, 7) sont identiques et se situent d'une manière appropriée dans une plage de 0,2 à 2,5 mm, de préférence de 0,5 à 1,5 mm.

8. Câble de campagne selon l'une des revendications 1 à 7, **caractérisé en ce que** la gaine précitée du guide d'ondes de lumière, constituée d'au moins deux couches (3, 5, 7), est entourée par une enveloppe en matière synthétique, de préférence en polyuréthanne.

9. Câble de campagne selon la revendication 8, **caractérisé en ce que** l'enveloppe est renforcée sur son côté intérieur par au moins un fil métallique s'étendant hélicoïdalement, de préférence par un fil en acier ou fil à ressort.

10. Câble de campagne selon l'une des revendications 1 à 9, **caractérisé en ce que** le diamètre du câble (1) se situe dans la plage entre 1 et 6 mm, de préférence entre 1,5 et 3 mm.

# Fig.1

# Fig.2